# EUROPEAN PATENT SPECIFICATION

(11) **EP 0 977 138 B1**
(45) Date of publication and mention of the grant of the patent: **06.09.2006**
(21) Application number: 99306080.5
(22) Date of filing: 30.07.1999
(51) Int. Cl.: G06K 1/12, G05D 1/03, G06K 1/00

(54) **Road marker magnetizing method**
Magnetisierungsmethode für Strassenmarkierung
Méthode de magnétisation pour marquage routier

(30) Priority: 31.07.1998 JP 21697898
(43) Date of publication of application: 02.02.2000
(73) Proprietor: Director General of National Institute for Land and Infrastructure Management, Ministry of Land, Infrastructure and Transport, Tsukuba City, Ibaraki Prefecture 305-0804 (JP)
(72) Inventor: Yonemura, Ryugen, c/o Osaka Works, Konohana-ku, Osaka-shi, Osaka (JP)
(74) Representative: Dixon, Philip Matthew

(56) References cited:
- EP-A- 0 853 303
- WO-A-92/08176
- US-A- 3 575 255
- US-A- 3 668 624
- US-A- 4 658 928
- US-A- 4 990 841

## Description

The present invention relates to a method of magnetizing road markers for communicating road information, such as a state and a form of a road or the like, to a vehicle.

In recent years, various types of technology for realizing automatic driving of a vehicle have been proposed. In these types of technology, it has been tried to provide driving assistance by supplying various types of road information to a vehicle and controlling a steering mechanism, accelerating mechanism, and a braking mechanism or the like in the vehicle according to the supplied information (see, for instance, Japanese Patent Application No. 8-918314 by the present inventor).

As a technology for supplying road information to a vehicle, there is, for instance, a technology using a magnetic marker (see to US Patent No. 5347456 filed 13 September 1994, and PCT International Publication WO92/08176 filed 14 May 1992).

In this technology, a plurality of magnetic markers each previously magnetized with N polarity or S polarity are embedded in a road. In this case, the magnetized markers are two-dimensionally installed in a road according to a pattern-following code corresponding to road information. By detecting a magnetic pattern of the magnetic marker embedded in the road, road information is supplied to a vehicle.

In the technology described above, a marker is previously magnetized and the magnetized marker is embedded in a road. However, in this way of embedding a magnetic marker, there is the problem that the work involved in embedding the magnetic markers is very troublesome. This problem becomes extremely troublesome when attempting to respond to an anticipated increase of information supplied to each vehicle in the future.

To describe in more detail, when it is attempted to provide more, improved driving aids to drivers, the quantity of information to be added to a magnetic marker increases. In this case, it is necessary to increase the number of magnetic markers embedded in a road along a lateral direction as well as a longitudinal direction of the road. When a magnetic marker is embedded in a road, it is necessary to select magnetic markers each having a required polarity from a number of magnetic markers each magnetized with N or S polarity and to embed the markers according to a pattern-following code corresponding to road information. So, the greater the number of magnetic markers to be embedded, the more complicated and troublesome the embedding work.

Also in the technology described above, for instance, when road information correlated to a magnetic marker is to be changed after embedding, a very complicated operation is required. Namely, it is required to dig out the magnetic markers already embedded and then to re-embed other magnetic markers following a pattern corresponding to the new road information.

Further in the conventional technology, there has been no concept of cleaning off iron pieces or iron powder attracted to the equipment due to leaked magnetic flux from a magnetic marker. However, when a magnetic road marker is embedded in a road and left there for a certain period of time, many foreign materials are often attracted to the portion of the road where the magnetic marker is embedded, and in that case, the magnetic flux from the magnetic marker is disturbed, which makes it impossible to deliver correct information.

To respond to this problem, it is conceivable that leaked magnetic flux from a magnetic marker is set to a weak level so that, even if foreign materials are attracted thereto, the materials are naturally removed. However, with this configuration, there may be cases where leaked magnetic flux from a magnetic marker can not be detected by a magnetic sensor in a vehicle, so that this configuration is not preferably.

WO 92/08176 and US 4,990,841 disclose magnetically guided vehicles.

US 3,572,255 discloses an apparatus for applying a magnetisable paint strip to a road surface and for magnetising the paint strip to comprise a magnetisation pattern for conveying information to passing vehicles. The independent claim is characterised over this document.

US 3,668,628 discloses magnetic markers that can be installed in or on a road and be magnetised prior to or after such installation.

The present invention seeks to provide a magnetic road marker system which solves at least some of the technological problems described above.

Viewed from one aspect the present invention provides apparatus for magnetizing a road marker providing road information to vehicles according to claim 1.

A magnetizing means for magnetizing a road marker, a code storing means for storing code corresponding to specified road information, and a magnetization control means for controlling the magnetizing means are provided. The magnetization control means controls the magnetizing means so that a road marker is magnetized according to a pattern-following code stored in the code storing means. With this, the road marker is magnetized by the magnetizing means according to a pattern-following code corresponding to road information. Because of this configuration, as compared to a case where road markers each having required polarity are selected from road markers previously magnetized and embedded, the work involved in embedding road markers can easily be executed.

A road marker magnetized with the magnetizing means may be demagnetized with a demagnetizing means. Also there may be provided an input means for inputting road information to be newly set on a road marker and a rewriting means for encoding road information inputted with this input means and rewriting the road information stored in the code storing means to encoded road information. With this configuration, a magnetized road marker can be demagnetized, so that, when road information is to be updated, it is possible to demagnetize a road marker once and then newly magnetize the road marker according to a pattern-following code corresponding to the new road information. Because of this configuration, road information can easily be updated.

Further a position of a road marker may be detected with a position detecting means. With this configuration, even when the position of a road marker can not be identified from the surface of a road with the magnetic marker embedded therein, the position of the road marker can easily be detected, so that the reliability of the magnetizing/demagnetizing operation for the road markers can be improved. Because of this feature, the work of embedding the road markers can be carried out even more efficiently. Also the configuration is allowable in which the position detecting means is located near and within a magnetic field generated by an exciting coil and a magnetic detecting coil for detecting variation of the magnetic field is provided therein. With this configuration, the position of a road marker can be detected by checking variation of a magnetic field, so that the position of the road marker can be detected accurately.

Also foreign materials attracted to a road marker magnetized by the magnetizing means may be removed with a cleaning means. With this configuration, foreign materials such as iron particles or iron powder can be removed, so that information provided by the road marker is always maintained correct. Further a magnetized state detecting means for detecting a magnetized state of a road marker magnetized by the magnetizing means may be provided. With this, whether a road marker is magnetized or demagnetized can be checked, so that a correct operation for magnetizing or demagnetizing the road marker can be executed. Because of this feature, the reliability of the work of embedding road markers can be improved. Also the magnetic flux density from a road marker may be detected by the magnetized state detecting means. With this, a magnetized state can be detected according to the magnetic flux density from a road marker. A commercially available magnetic sensor can be used as the magnetized state detecting means.

Further, a configuration is allowable in which a plurality of road markers are provided at a specified pitch along a lateral direction of a road, and a plurality of magnetizing means are provided also at a specified pitch along the lateral direction of the road. With this configuration, a plurality of road markers embedded along the lateral direction of a road can simultaneously be magnetized, so that the work of magnetizing road markers can be carried out even more efficiently. Also the configuration is allowable in which a plurality of road markers are provided along the lateral direction of a road and the magnetizing means is moved along the lateral direction of the road. With this configuration, a plurality of road markers provided along the lateral direction of a road can be magnetized without moving the road marker magnetizing device itself, so that a plurality of road markers can be magnetized with a simple configuration. Also a device for carrying out the method of magnetizing road markers may be loaded on a vehicle. With this configuration, the work of embedding road markers can be executed by driving the vehicle, so that the work can be carried out more easily. Especially by automatically driving a vehicle, a central position of each magnetized marker can easily be detected, and the work of embedding road markers can be made even easier.

Thus, at least in its preferred embodiments, the present invention:
- makes it possible to embed road markers;
- provides a road marker magnetizing method which makes it possible to easily change the road information to be assigned to a road marker once embedded in a road;
- provides a road marker magnetizing method which makes it possible to remove foreign materials attracted by leaked magnetic flux from a road marker and can improve thereby the reliability of the road marker; and
- provides a road marker magnetizing method which makes it possible to easily embed road markers, particularly when a device for carrying out the road marker magnetizing method is mounted on a vehicle dedicated to the magnetization of a road marker, to easily change road information to be assigned to each road marker, and further to clean off foreign materials attracted to a road marker.

An embodiment of the invention will now be described by way of example only and with reference to the accompanying drawings, in which:
Fig. 1 is a plan view showing the general configuration of a road marker embedding system according to one embodiment of the present invention;
Fig. 2 is a perspective view showing the configuration of a road marker;
Fig. 3 is a block diagram showing the internal configuration of a vehicle dedicated to embedding road markers;
Fig. 4A is a view showing the configuration of a marker detecting device in a case where the vehicle dedicated to the work of embedding road markers is seen from the front, while Fig. 4B is a view showing the configuration of the marker detecting device when the vehicle dedicated to the work of embedding road markers is seen from the side;
Fig. 5A is a view showing the configuration of a magnetizing/demagnetizing device according to the present invention when the vehicle dedicated to the work of embedding road markers is seen from the front, while Fig. 5B is a view showing the configuration of the magnetizing/demagnetizing device when the vehicle dedicated to embedding road markers is seen from the side;
Fig. 6A and Fig. 6B are views each showing magnetization of a road marker;
Fig. 7 is a circuit diagram showing the magnetizing/demagnetizing device;
Fig. 8 is a view showing the configuration of the magnetized state detecting device when the vehicle dedicated to embedding road markers is seen from the front; and
Fig. 9 is a block diagram mainly showing the internal configuration of the control device.

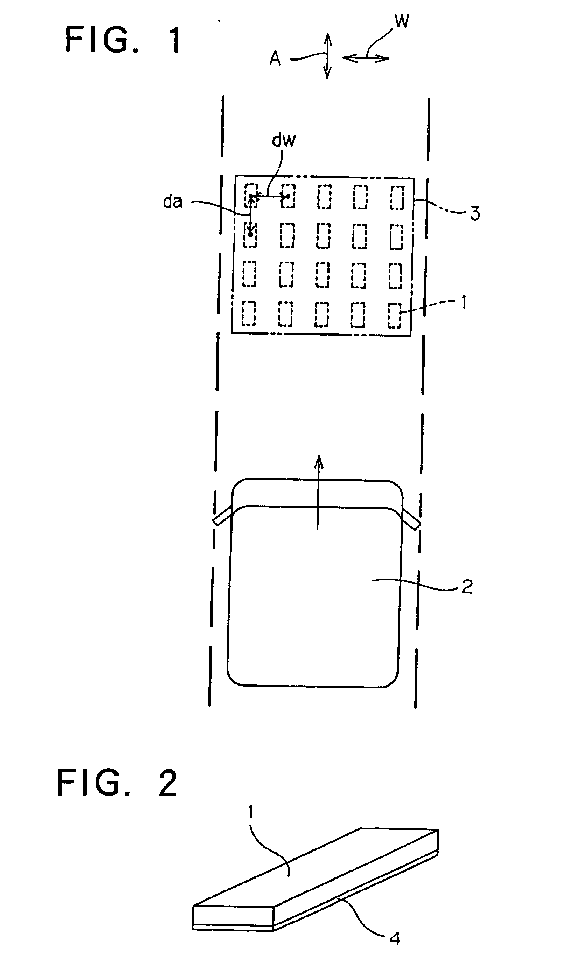

Fig. 1 is a plan view showing the general configuration of a road marker embedding system according to one embodiment of the present invention. This road marker embedding system is used for magnetizing an unmagnetized road marker embedded in a road such as a highway or an ordinary road with a special vehicle 2 dedicated to the work of embedding and magnetizing road markers 1 in order to impart road information to a marker group 3 comprising a plurality of road markers 1.

The road marker 1 is a rectangular body made from magnetic material such as ferrite with a size of, for instance, 5 cm (width) x 30 cm (length) x 1 cm (thickness) as shown in Fig. 2. An iron piece (yoke) 4 for collecting leaked magnetic flux from the road marker 1 is attached to a bottom surface of the road marker 1.

When embedding the group of markers 3, the road markers 1 are two-dimensionally embedded in a plurality of rows along a lateral direction W of the road as well as along a longitudinal direction A of the road. In this case, as a method of embedding the group of markers 3, it is conceivable to embed road markers at especially necessary places, such as near a tunnel, just before a sharp curve, or a location with a narrow field of view in the initial stage and then increase the locations of embedded road markers gradually according to necessity.

A pitch dw with which road markers 1 are provided in the lateral direction (width direction) W of the road and a pitch da with which road markers 1 are provided in the longitudinal direction A of the road is set to a value not less than a minimum pitch dmin (for instance, 20 cm) which allows magnetic interference between adjacent road markers 1. For instance, the pitch dw is set to 30 cm with pitch da to 20 cm. Also the number m of rows of road markers 1 is set to, for instance, 5 according to a minimum value of a vehicle's width as well as to the pitch da.

Imparting road information to the group of markers 3 is achieved by, for instance, magnetizing the road marker 1 provided at the most frontward position and at the left edge of a lane in the direction in which the special vehicle 2 dedicated to embedding road markers advances as the start marker and successively magnetizing other markers from this start marker according to a pattern-following code corresponding to road information.

Although the above description assumes a road marker to be embedded in the road, a tape-formed road marker adhered to a road may be used. Also in place of unmagnetized road markers, those magnetized with only N polarity or S polarity may be used.

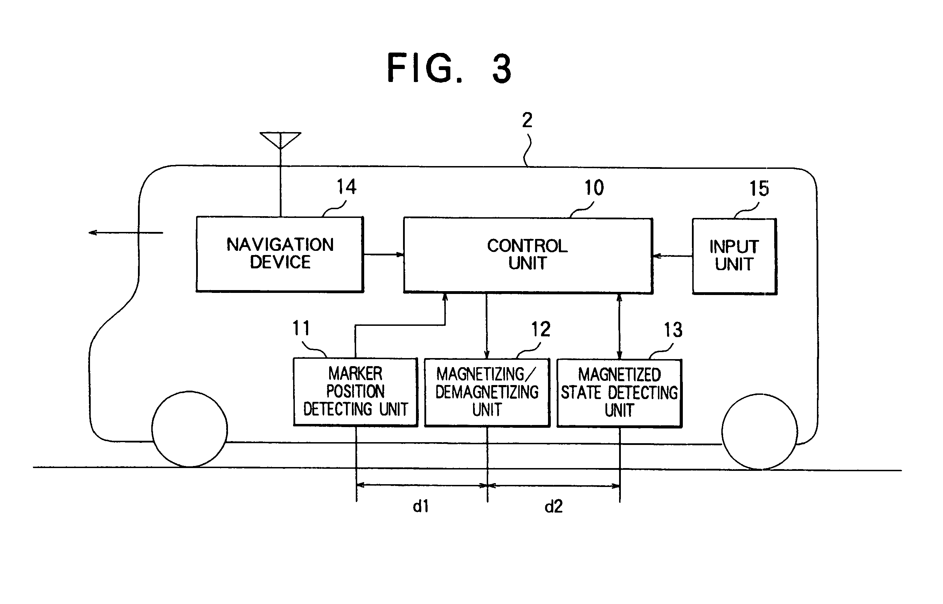

Fig. 3 is a block diagram showing the conceptual configuration of the special vehicle 2 dedicated to the work of embedding road markers. The special vehicle 2 has a control unit 10 which functions as a control core comprising a computer including a CPU, a ROM or a RAM.

Also the special vehicle 2 has a marker position detecting unit 11 for outputting a position detection signal corresponding to the position of a road marker 1. At a position offset a first distance dl from the marker position detecting unit 11 backward in a longitudinal direction of the vehicle, there is provided a magnetizing/demagnetizing unit 12 for magnetizing or demagnetizing the road marker 1 and also removing foreign materials attracted to the road marker 1 due to its magnetism and adhered thereon. At a position offset a second distance d2 from the magnetizing/demagnetizing unit 12 backward in a longitudinal direction of the vehicle, there is provided a magnetized state detecting unit 13 for outputting a magnetized state detection signal indicating a magnetized state of the road marker 1.

The control unit 10 has a road information database with road information to be imparted to the road marker 1 stored therein (not shown in the figures), and functions to give an instruction for magnetizing the road marker 1 to the magnetizing/demagnetizing unit 12 in response to an output from the marker position detecting unit 11.

Furthermore, the special vehicle 2 has a navigation device 14 for detecting the current position of the special vehicle 2 using the GPS (Global Positioning System) navigation system. More specifically the navigation device 14 detects the current position of the special vehicle 2 by using so-called kinematic position survey techniques based on the GPS navigation system. With this, it is possible to detect the current position of the special vehicle 2 with a maximum error of up to several centimetres. The navigation device 14 gives vehicle position data indicating the current position thereof to the control unit 10 when the current position of the special vehicle 2 is detected.

As for the kinematic position measurement, refer to, for instance, "Precise Position Survey System with Satellites", p. 166 to p. 167, November 15, 1989, Japan Survey Association.

Furthermore, the special vehicle 2 has an input unit 15 for inputting instruction data for giving various types of instruction to the control unit 10. The instruction data includes, for instance, information on new roads to be changed from time to time such as information on a new lane if a new lane is added, information on the junction when a new road joins a road on which a vehicle is now running. Instruction data inputted from the input unit 15 is passed to the control unit 10.

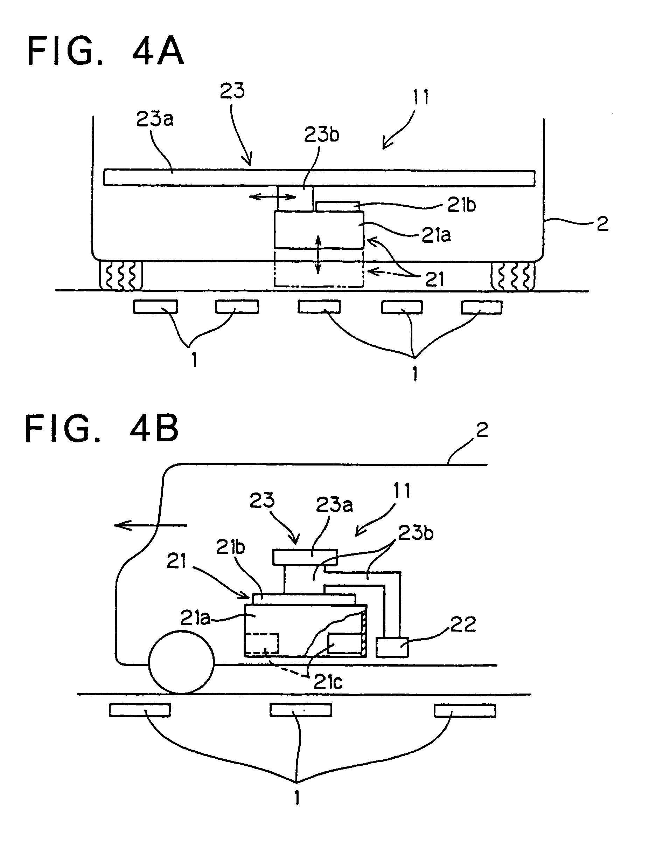

Fig. 4A is a view showing the configuration of the marker position detecting unit 11 when the special vehicle 2 is seen from the front. Fig. 4B is a view showing the configuration of the marker position detecting unit 11 when the special vehicle 2 is seen from the side.

The marker position detecting unit 11 comprises a position detecting sensor 21 for generating a position detection signal for a position of the marker 1, a polarity determining sensor 22 for outputting a polarity determination signal indicating a polarity of the road marker 1, and a moving mechanism 23 for moving the position detecting sensor 21 as well as the polarity determining sensor 22 in a direction of a lane and up and down. The moving mechanism 23 has a long base section 23a provided along a lateral direction of the vehicle, and a movable section 23b movable up and down and also in the longitudinal direction of the base section 23a. The position detecting sensor 21 and polarity determining sensor 22 are attached to the movable section 23b, and can be displaced between a stand-by position indicated by a solid line and a processing position indicated by a double dashed line in the figure.

The position detecting sensor 21 is made from a conductive material such as aluminium, and has a conductive shield case 21a with only the lower section opened, an exciting coil 21b positioned on a top surface of the conductive shield case 21a, and two detection coils 21c provided at symmetrical positions inside the conductive shield case 21a and along a direction in which the vehicle is running.

Next there is described a principle for detecting a position of the road marker 1. (Refer to, for instance, "Movement of and guidance for handicapped people and sensor technology. The handicapped guidance system utilizing ferrite" Wakaumi, Yamauchi, p. 87 to p. 88, Sensor Technology, August issue in 1991 Vol. 11, No.8). An AC magnetic field is generated by the excitation coil 21b. This AC magnetic field is guided downward along a top surface and a side surface of the conductive shield case 21a. If the road marker 1 is located under the position detecting sensor 21, the road marker 1 forms a reverse magnetic field, so that the magnetic field distribution near the detection coil 21c changes.

Magnetic fluxes generated around the two detection coils 21c and passing through each coil have substantially the same values when the road marker 1 is located at a substantially central position between the two detection coils 21c. On the other hand, when the road marker 1 is located at a position closer to either one of the detection coils, the magnetic flux generated around the detection coil closer to the road marker 1 is larger than that generated around the other one.

So the position sensor 21 detects a change of magnetic flux passing through each detection coil 21c as a change of an AC voltage in the coil with a resonance circuit, and further derives a difference between the two AC voltages in the two coils and outputs a signal indicating the difference as a position detection signal.

As the polarity determining sensor 22, it is possible to use, for instance, a magnetic field sensor comprising a Hall element, a magnetic field sensor in which a Wheatstone bridge is formed with an MR (magneto resistive) element, or a flux gate type of magnetic field sensor. As the polarity determining sensor 22, one having a size corresponding to the leaked magnetic flux density from the road marker 1 and also capable of outputting a polarity determination signal indicating a polarity of the leaked magnetic flux is suited for this application.

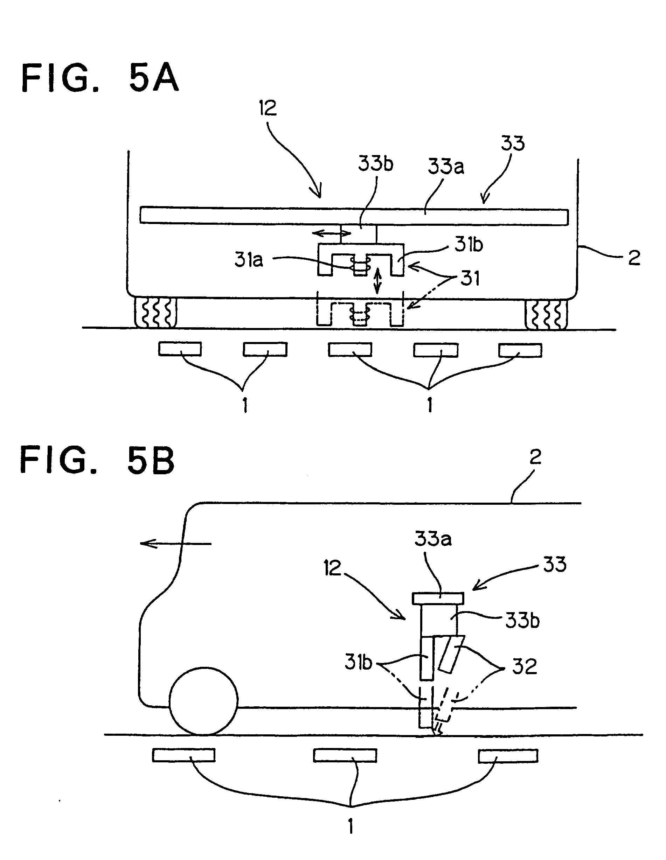

Fig. 5A is a view showing the configuration of the magnetizing/demagnetizing unit 12 when the special vehicle 2 is seen from the front, and Fig. 5B is a view showing the configuration of the magnetizing/demagnetizing unit 12 when the special vehicle is seen from the side.

The magnetizing/demagnetizing unit 12 comprises a magnetizing/demagnetizing coil 31 with the coil wound around a coil section 31a for generating a magnetic field and having a magnetic shield section 31b made from a conductive material for collecting the magnetic flux generated by the coil section 31a, an air nozzle 32 from which air for removing iron particles or the like is exhausted, and a moving mechanism 33 having the same configuration as that of the moving mechanism 23. The magnetic shield section 31b and air nozzle 32 are attached to the movable section 33b, and can move between the stand-by position indicated by a solid line and a processing position indicated by a double dashed line because of this configuration.

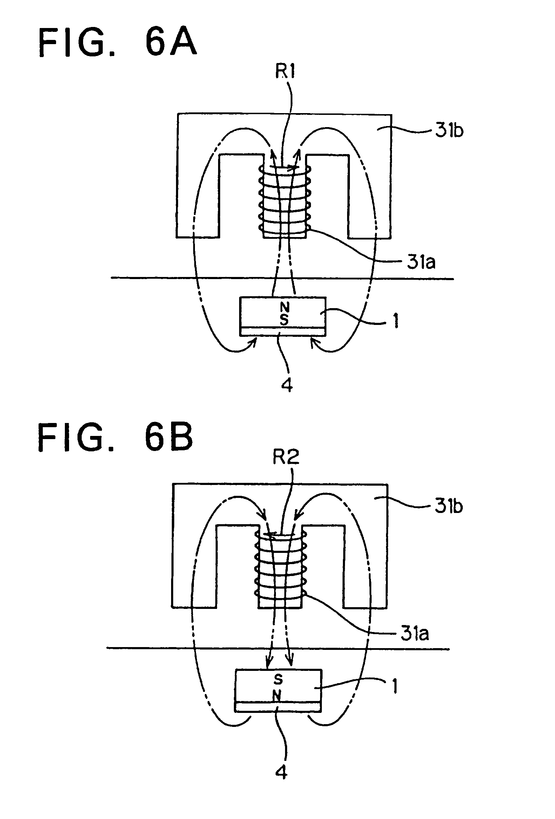

As shown in Fig. 6A, when a current flows along a first feed direction R1 in the coil section 31a, a magnetic field is generated in the coil section from the bottom to top as shown by the double dashed line. This magnetic field magnetizes the road marker 1 from the bottom to top thereof. With this, the top edge of the road marker 1 is magnetized with polarity N. On the other hand, as shown in Fig. 6B, when the current flows in a second feed direction R2 in the coil section 31a, a magnetic field from top to bottom, which is contrary to the above-described one, is formed as indicated by the double dashed line. As a result, the road marker 1 is magnetized from top to bottom. With this, the upper edge of the road marker 1 is magnetized with polarity S.

It should be noted that, when the road marker 1 is magnetized, the generated magnetic field must have an intensity about 3 times higher than the coercive force of the road marker 1. More specifically, when ferrite is used as a material for the road marker 1, as a coercive force of ferrite is around 280kAm⁻¹ (3.5 kOe), the intensity of the generated magnetic field must be around 840kAm⁻¹ (10.5 kOe) or more.

Demagnetization of the road marker 1 is achieved by generating a magnetic field of an intensity which is substantially equal to a coercive force of the road marker 1 in a direction such that polarity of the road marker 1 is opposite to that inside the coil section 31a. More specifically, a current is generated in the second feed direction R2 in the coil section 31a when the road marker 1 has been magnetized with polarity N, and a current is generated in the first feed direction R1 inside the coil 31a when the road marker has been magnetized with polarity S.

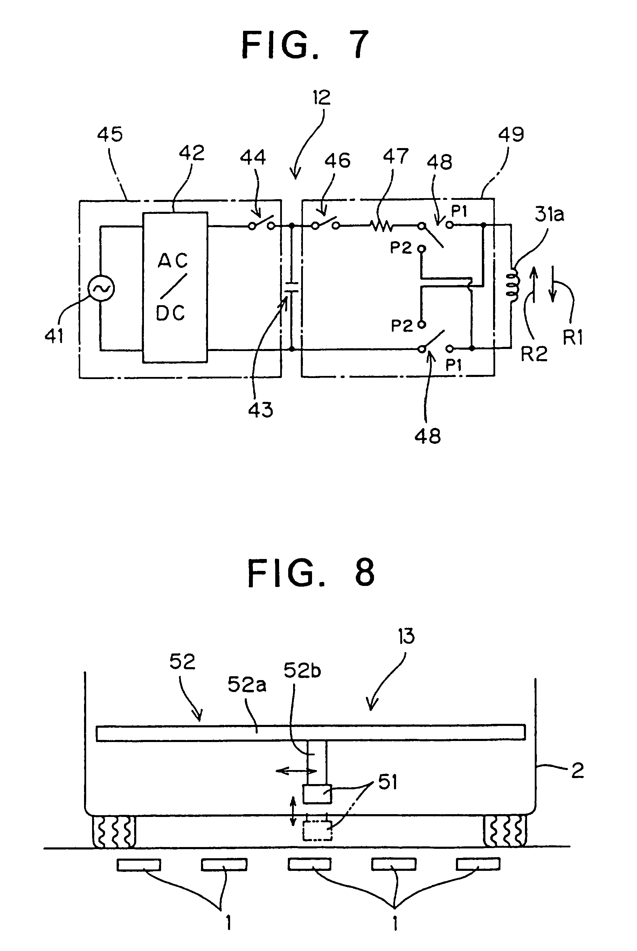

Fig. 7 is a circuit diagram showing the configuration of the magnetizing/demagnetizing unit 12, and mainly shows a structure for feeding an electric current to the coil section 31a. The magnetizing/demagnetizing unit 12 has an AC current source 41, an AC/DC converting circuit 42 for converting an AC voltage generated in the AC current source 41 to a DC voltage (for instance, 2000 V), and a charging circuit 45 having a charge switch 44 which is turned ON when a capacitor 43 (for instance, 1F) is to be charged. Further the magnetizing/demagnetizing unit 12 comprises a magnetizing/demagnetizing circuit 49 having a discharge switch 46 which is turned ON when the capacitor 43 is to be discharged, a current adjusting resistor 47 (with a resistance of, for instance, 0.05 Ohms), and a select switch for selecting either the first feed direction R1 or the second feed direction R2 as the direction in which the discharged current flows in the coil section 31a.

When the capacitor 43 is charged, the charge switch 44 is turned ON with the discharge switch 46 and select switch 48 turned OFF. On the other hand, when a discharge current is fed to the magnetizing/demagnetizing coil 31, the discharge switch 44 is turned OFF with the discharge switch 46 turned ON. In this case, a connection terminal of the select switch 48 is switched by deciding whether the road marker 1 is to be magnetized with polarity N or with polarity S. Namely, to magnetize the road marker 1 with polarity N, the select switch 48 is connected to a connection terminal P1. As a result, a current flows along the first feed direction R1 in the coil section 31a. As a result, the road marker 1 is magnetized with polarity N. On the other hand, when the road marker 1 is to be magnetized with polarity S, the select switch 48 is connected to a connection terminal P2. As a result, an electric current flows along the second feed direction R2 inside the coil section 31a, and the road marker 1 is magnetized with polarity S.

Fig. 8 is a view showing the configuration of the magnetized state detecting unit 13 when the special vehicle 2 is seen from the front. The magnetized state detecting unit 13 comprises a magnetized state detecting sensor 51, and a moving mechanism 52 having a configuration similar to that of the moving mechanism 23. The magnetized state detecting sensor 51 is attached to a movable section 52b, and can be moved between a stand-by position indicated by a solid line and a processing position indicated by a double dashed line. As the magnetic state detecting sensor 51, for instance, one having the same configuration as that of the polarity determining sensor 22 may be used.

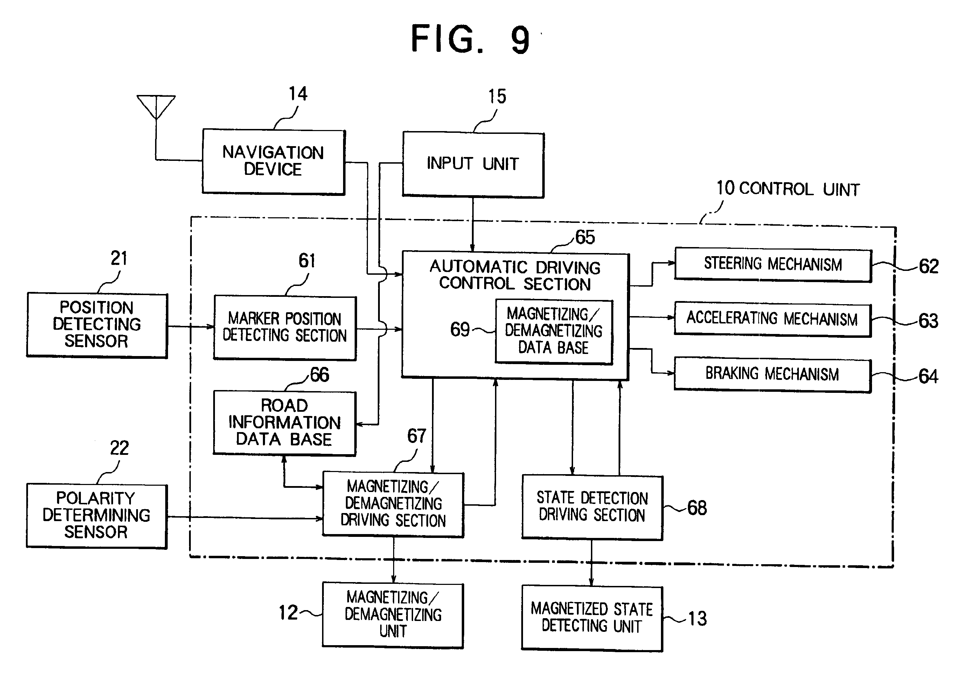

Fig. 9 is a block diagram showing mainly the internal configuration of the control unit 10. The control unit 10 has a marker position detecting section 61 for detecting one edge of a start marker in a longitudinal direction thereof according to a position detection signal given from the position detecting sensor 21 and outputting a trigger signal, and an automatic driving control section 65 for controlling the steering mechanism 62, accelerating mechanism 63, and braking mechanism 64 according to the trigger signal output from the marker position detecting section 61 and vehicle position data output from the navigation device 14.

Also the control unit 10 has a magnetize/demagnetize driving section 67 for driving the magnetizing/demagnetizing unit 12 under the control of the automatic driving control section 65 and also according to a polarity determination signal output from the polarity determining sensor 22 as well as to road information stored in the road information database 66, and a magnetized state detection driving section 68 for driving a magnetized state detecting section 13 under the control of the automatic driving control section 65.

The automatic driving control section 65 has a magnetizing/demagnetizing database 69 in which data required for magnetization and demagnetization is stored. The data includes data on the vehicle including information on a first distance d1 between the marker position detecting unit 11 and the magnetizing/demagnetizing unit 12 and information on a second distance d2 between the magnetizing/demagnetizing unit 12 and the magnetized state detecting unit 13, marker data correlated to each of the markers constituting the group 3 of markers, and road map data. The marker data includes coordinate data indicating a latitude and a longitude of a start marker of the group 3 of markers, a number of road markers 1 forming the group 3 of markers, and the pitches dw, da indicating the distance between adjoining road markers 1.

The road information database 66 stores therein positional information indicating relative positions on the road, road horizontal information indicating a horizontal state of a road, lane information indicating whether a road is up or down, branching and confluence information indicating whether a road is branched or confluenced at a point, width information indicating the width of a road, road construction information, and other types of information in an encoded state. The road information is stored in correlation to each position on the road. Further, the information is stored in correlation to any group of markers embedded in a road.

Road information stored in the road information database 66 is updated when new road information is input from the input device 15. To describe in more detail, new road information is input together with information concerning a group of markers to be correlated thereto from the input device 15. The input road information is encoded in the control unit 10, and is written to the road information database 66. In this case, the control unit 10 rewrites road information for a group of markers to be correlated to the new road information with the encoded new road information.

Next the operations of the control unit 10 will be described. The control unit 10 starts its operations when the special vehicle 2 is driven to a position near the group of markers 3 by a worker and the driving mode is switched to automatic via the input device 15.

The automatic driving control section 65 drives the special vehicle 2 according to coordinate data for a start marker and road map data stored in the magnetizing/demagnetizing database 69 and positional data for the vehicle given from the navigation device 14 so that the magnetizing/demagnetizing coil 31 arrives just above the start marker. More specifically, the automatic driving control section 65 drives the steering mechanism 62 and accelerating mechanism 63 so that the position detecting sensor 21 arrives just above the start marker, and makes the special vehicle drive slowly along the road.

On the other hand, the marker position detecting section 61 always monitors to check whether the absolute value of a position detection signal output from the position detection sensor 21 is less than a prespecified threshold value or not. When the absolute value of the position detection signal is not less than the threshold value, it can be considered that the position detecting sensor 21 has been positioned on one edge of the start marker in a longitudinal direction thereof, so that a trigger signal is output to the automatic driving control section 65 to transfer the data that the position sensor 21 is located at a central position of the start marker at a time when the position detecting sensor 21 reaches the center from the edge of the road marker.

The automatic driving control section 65 determines from the time when the trigger signal is given from the marker position detecting section 61, namely from the time when the position detecting sensor 21 arrives at the center of the start marker, whether the special vehicle 2 has been driven the first distance dl between the marker position detecting unit 11 and the magnetizing/demagnetizing unit 12 or not. During this run, the polarity determining sensor 22 gives a polarity determining signal corresponding to the polarity of the road marker 1 to the magnetization/demagnetization driving section 67. The automatic driving control section 65 drives the braking mechanism 64 to stop the special vehicle 2 when it is determined that the special vehicle has driven the first distance dl. As a result, the magnetizing/demagnetizing coil 31 is positioned just above the start marker. The automatic driving control section 65 gives a trigger signal to the magnetization/demagnetization driving section 67 when the special vehicle is stopped.

When a trigger signal is given from the automatic driving control section 65, the magnetization/demagnetization driving section 67 drives the movable section 33b to lower the magnetizing/demagnetizing coil 31. Then the direction in which electric current is fed to the coil section 31a is decided according to the road information stored in the road information database 66, and current is supplied to the coil section 31a in the decided direction.

To describe in more detail, when it is determined according to a polarity determination signal output from the polarity determining sensor 22 that a road sensor has not been magnetized, the magnetization/demagnetization driving section 67 checks whether the road marker is to be magnetized with polarity N or with polarity S according to the road information. And a current is generated in a direction corresponding to a result of this determination. Also the magnetization/demagnetization driving section 67 determines whether a result of the determination is consistent with a polarity corresponding to the road information when either polarity N or polarity S is determined according to a polarity determination signal output from the polarity determining sensor 22. When it is determined that the result of the determination is consistent with the polarity indicated by the road information, the state is maintained as it is. If it is determined that the result of the determination is not consistent with the polarity, it is determined that the road information is abnormal, and the start marker is demagnetized by producing a current in the direction for cancelling the polarity of the start marker. Then a current is supplied to the coil section 31a so that the road marker 1 will be magnetized with the correct polarity corresponding to the road information.

When a trigger signal is given from the automatic driving section 65, the magnetization/demagnetization driving section 12 exhausts air from the air nozzle 32. With this, iron particles or other foreign materials adhered on a road due to leaked magnetic flux from the road marker 1 are blown off.

When processing of the start marker is finished, the magnetization/demagnetization driving section 67 executes the same processing on another marker adjacent to the start marker in a lateral direction of the road. Namely, the magnetization/demagnetization driving section 67 makes the movable section 33b move by the pitch dw along the base section 33a and then go down, and executes the magnetizing/demagnetizing processing and air exhaust processing described above.

The above-described operating sequence is executed repeatedly, and when the magnetizing/demagnetizing processing and air exhaust processing have been finished on all of the road markers 1 embedded in a lateral direction of the road, the magnetization/demagnetization driving section 67 outputs a processing terminate signal to the automatic driving control section 65.

When the processing terminate signal is given, the automatic driving control section 65 drives the accelerating mechanism 63 to again drive the special vehicle 2. When the special vehicle 2 is moved by a distance corresponding to the second distance d2, the automatic driving control section 65 drives the braking mechanism 64 and stops the special vehicle 2. With this operation, the magnetized state detecting sensor 51 is positioned substantially just above the road marker 1 magnetized or demagnetized by magnetizing/demagnetizing coil 31. Then the automatic driving control section 65 gives a trigger signal to a state detection driving section 68. The state detection driving section 68 checks the magnetized state of the road marker 1 in response to the event that a trigger signal has been given thereto. More specifically, the state detection driving section checks whether the detected magnetic flux is consistent with a desired magnetic flux or not, and outputs an affirmative signal when the two magnetic flux densities are identical, and outputs a negation signal when the two magnetic flux densities are not identical.

The automatic driving control section 65 outputs an instruction signal for execution of processing of another road marker 1 adjacent to the processed road marker in a lateral direction of the road to the state detection driving section 68 when an affirmative signal is given. On the other hand, when a negative signal is given, the special vehicle 2 is driven backward to position the magnetizing/demagnetizing coil 31 just above the road marker 1. Then the magnetization/demagnetization driving section 67 is instructed to re-execute the processing.

The state detection driving section 68 makes the movable section 52b move by the pitch dw along the base section 52a and then go down when an instruction signal is given from the automatic driving control section 65, and then executes the same processing.

The processing is executed repeatedly, and when the processing of all road markers 1 provided along a lateral direction of the road is finished, the state detection driving section 68 outputs a processing terminate signal to the automatic driving control section 65.

The automatic driving control section 65 drives the accelerating mechanism 63 in response to the event that the processing terminal signal has been given from the state detection driving section 68 to drive the special vehicle 2 again, and makes the special vehicle 2 move by a distance obtained by subtracting a length (d1 + d2) between the marker position detecting unit 11 and magnetized state detecting sensor 51 from the pitch da, and then drives the braking mechanism 64 to stop the special vehicle 2. As a result, the position detecting sensor 21 is positioned substantially just above the road marker 1 in the next line. Then, after it is confirmed by the marker position detecting section 61 that the position detecting sensor 21 has been positioned at the center of the road marker 1, the magnetizing/demagnetizing processing is started again.

The magnetizing/demagnetizing processing on one group of markers 3 is executed as described above, and the entire group of road markers is correlated to one set of road information.

As described above, with this embodiment of the present invention, road information is given to the group of markers 3 by magnetizing a non-magnetized road marker 1 according to a pattern corresponding to road information, so that, as compared to a case where road markers which have each previously been magnetized are selected and embedded according to a pattern corresponding to a code, even if the volume of road information increases and also the number of markers to be embedded increases, the work of embedding road markers can easily be executed.

In this embodiment, because the unmagnetized road marker 1 is embedded in a road even in a case where road markers are arrayed and embedded at a high density, there is no possibility that the work of embedding road markers becomes complicated.

To describe in more detail, when the road marker 1 is embedded at a place where the thickness of pavement is around 5 cm, for example on a bridge, it is necessary that the thickness of the road marker is not more than around 2 cm, and in that case, to achieve the desired magnetic intensity, it is required to use a road marker 1 having a large length of around 30 cm.

On the other hand, to make the volume of information larger or the information density higher, it is desirable to provide road markers at as great a density as possible. When the length of each road marker is large, the gap between the road markers 1 becomes smaller, and sometimes there is no way but to provide road markers with substantially no gap. In this case, if the road markers have been magnetized, sometimes the adjoining road markers repel each other, which may make the embedding work complicated, but when the road markers have not yet been magnetized, as in this embodiment, the problem as described above does not occur, so that the workability does not decrease.

Further, the road marker 1 once magnetized and embedded in a road can be demagnetized, so that, when it is necessary to rewrite road information, the road information can be rewritten. Because of this feature, road information can easily be updated.

Further as foreign materials attracted to and adhered on a road due to leaked magnetic flux from the road marker 1 can be removed, leaked magnetic flux from the road marker 1 can be passed on to a vehicle at a desired intensity. Because of this feature, it becomes possible to supply accurate road information, which enables realization of a high reliability system.

Further as the position of the road marker 1 can be detected, reliability in the work of magnetizing/demagnetizing the road marker can be improved. Because of this feature, the work of embedding the road markers 1 can be carried out more efficiently. Also detection of the position of the as yet unmagnetized road marker 1 can easily be performed by detecting the disturbance of a magnetic field generated by the exciting coil 21b with the detection coil 21c.

Further, as magnetization/demagnetization of the road marker 1 can be confirmed, addition or deletion of road information can accurately be executed. Because of this feature, reliability in the work of embedding road markers 1 can be improved.

Further, a magnetized or demagnetized state of the road marker 1 can be detected with a commercially available inexpensive element such as an MR element capable of outputting a signal in proportion to a magnetic flux density, so that cost reduction is possible.

Further, the device is mounted on the special vehicle 2 and the special vehicle 2 is automatically driven to magnetize or demagnetize each road marker 1, so that the workload of a worker can be substantially reduced. Because of this feature, the work of embedding the road markers 1 becomes easier.

One embodiment of the present invention was described above, but the configuration of the present invention is not limited to that described above. In the above-described embodiment, only one magnetizing/demagnetizing unit 12 is provided, but a plurality of magnetizing/demagnetizing units 12 may be provided in the lateral direction of the road. In this case, the gap between the magnetizing/demagnetizing units 12 must be set to the same pitch as the pitch dw of the road markers 1 in the lateral direction of the road. With this configuration, when a plurality of road markers 1 are embedded along the longitudinal direction of the road, the plurality of road markers can be magnetized or demagnetized as a batch. For this reason, the work of magnetizing/demagnetizing the road markers 1 can be carried out efficiently.

With the above configuration, it is necessary to provide a plurality of magnetizing/demagnetizing coils, and because of this necessity it is needless to say that the magnetizing/demagnetizing coil 31 is moved with the moving mechanism 33 along a lateral direction of the road, as in the embodiment described above, if it is preferable to carry out the magnetizing/demagnetizing work with reduced cost.

The description of the embodiment above assumes a case where road markers for giving road information to a vehicle are magnetized or demagnetized, but the present invention can easily be applied to the magnetization and demagnetization of road markers indicating a lane for preventing a vehicle from going out of a lane on which the vehicle is currently running.

## Claims

1. Apparatus for magnetizing a road marker (1) providing road information to vehicles, the apparatus comprising:
a magnetizing means (12) for magnetizing the road marker (1);
a code storing means (66) for storing therein code corresponding to specified types of road information; and
a magnetization control means (67) for controlling the magnetizing means (12); wherein the magnetization control means (67) controls the magnetizing means (12) so that the road marker (1) embedded in the road is magnetized according to a pattern-following code stored in the code storing means (66)
**characterised by**:
a cleaning means (32) for removing foreign materials attracted by the magnetized road marker (1).

2. Apparatus as claimed in claim 1, comprising a demagnetizing means (12) for demagnetizing the road marker (1) magnetized with the magnetizing means (12).

3. Apparatus as claimed in claim 1 or 2, comprising a position detecting means (21) for detecting the position of the road marker (1).

4. Apparatus as claimed in claim 3, wherein the position detecting means (21) includes an exciting coil (21b) for generating a magnetic field and a magnetic field detecting coil (21c) provided inside the magnetic field generated by the exciting coil (21b) for detecting variations of the magnetic field.

5. Apparatus as claimed in any of claims 1 to 4, comprising a magnetized state detecting means (13) for detecting a magnetized state of the road marker (1) magnetized by the magnetizing means (12).

6. Apparatus as claimed in claim 5, wherein the magnetized state detecting means (13) detects a magnetic flux density from the road marker (1).

7. Apparatus as claimed in any of claims 1 to 6, wherein a plurality of the road markers (1) are provided at a specified pitch (dw) along a lateral direction (W) of a road and also a plurality of magnetizing units (12) are provided at the specified pitch (dw) along a lateral direction (W) of the road.

8. Apparatus as claimed in any of claims 1 to 6, wherein a plurality of the road markers (1) are provided along a lateral direction (W) of a road and the magnetizing means (12) is moved by a moving means (33b) along a lateral direction (W) of the road.

9. Apparatus as claimed in any of claims 1 to 8, mounted on a vehicle (2) dedicated to the work of magnetizing road markers.

## Patentansprüche

1. Vorrichtung zur Magnetisierung einer Straßenmarkierung (1), die Fahrzeugen Straßeninformationen bereitstellt, wobei die Vorrichtung aufweist:
ein Magnetisierungsmittel (12) zum Magnetisieren der Straßenmarkierung (1),
ein Codespeichermittel (66) zum Speichern eines Codes darin, der spezifizierten Typen von Straßeninformationen entspricht, und
ein Magnetisierungssteuermittel (67) zum Steuern des Magnetisierungsmittels (12), wobei das Magnetisierungssteuermittel (67) das Magnetisierungsmittel (12) steuert, so dass die Straßenmarkierung (1), die in der Straße eingebettet ist, entsprechend einem musterfolgenden Code magnetisiert wird, der in dem Codespeichermittel (66) gespeichert ist,
**gekennzeichnet durch**:
ein Reinigungsmittel (32) zum Entfernen von fremden Materialien, die **durch** die magnetisierte Straßenmarkierung (1) angezogen sind.

2. Vorrichtung nach Anspruch 1 mit einem Demagnetisierungsmittel (12) zum Demagnetisieren der Straßenmarkierung (1), die mit dem Magnetisierungsmittel (12) magnetisiert ist.

3. Vorrichtung nach Anspruch 1 oder 2 mit einem Positionserfassungsmittel (21) zum Erfassen der Position der Straßenmarkierung (1).

4. Vorrichtung nach Anspruch 3, bei der das Positionserfassungsmittel (21) eine Erregungsspule (21b) zum Erzeugen eines magnetischen Felds und eine Spule (21c) zum Erfassen eines magnetischen Felds umfasst, die innerhalb des magnetischen Felds vorgesehen ist, das durch die Erregungsspule (21b) erregt ist, um Variationen des Magnetfelds zu erfassen.

5. Vorrichtung nach einem der Ansprüche 1 bis 4 mit einem Erfassungsmittel (13) für einen magnetisierten Zustand, um einen magnetisierten Zustand der Straßenmarkierung zu erfassen, die durch das Magnetisierungsmittel (12) magnetisiert ist.

6. Vorrichtung nach Anspruch 5, bei der das Erfassungsmittel (13) für einen magnetisierten Zustand eine magnetische Flussdichte von der Straßenmarkierung (1) erfasst.

7. Vorrichtung nach einem der Ansprüche 1 bis 6, bei der eine Mehrzahl der Straßenmarkierungen (1) bei einem spezifizierten Abstand (dw) entlang einer lateralen Richtung (W) einer Straße und ebenfalls eine Mehrzahl von magnetisierenden Einheiten (12) bei dem spezifizierten Abstand (dw) entlang einer lateralen Richtung (W) der Straße vorgesehen sind.

8. Vorrichtung nach einem der Ansprüche 1 bis 6, bei der eine Mehrzahl der Straßenmarkierungen (1) entlang einer lateralen Richtung (W) einer Straße vorgesehen sind und das Magnetisierungsmittel (12) durch ein Bewegungsmittel (33b) entlang einer lateralen Richtung (W) der Straße bewegt ist.

9. Vorrichtung nach einem der Ansprüche 1 bis 8, die in einem Fahrzeug (2) angebracht ist, das für die Arbeit des Magnetisierens von Straßenmarkierungen bestimmt ist.

## Revendications

1. Appareil pour magnétiser un marqueur routier (1) fournissant des informations routières aux véhicules, l'appareil comprenant :
un moyen de magnétisation (12) pour magnétiser le marqueur routier (1) ;
un moyen de stockage de code (66) pour stocker dans celui-ci un code correspondant aux types spécifiés d'informations routières ; et
un moyen de commande de magnétisation (67) pour commander le moyen de magnétisation (12) ; dans lequel le moyen de commande de magnétisation (67) commande le moyen de magnétisation (12) de telle sorte que le marqueur routier (1) intégré dans la route est magnétisé selon un code suivant un motif stocké dans le moyen de stockage de code (66) ;
**caractérisé par** :
un moyen de nettoyage (32) pour éliminer les matières étrangères attirées par le marqueur routier (1) magnétisé.

2. Appareil selon la revendication 1, comprenant un moyen de démagnétisation (12) pour démagnétiser le marqueur routier (1) magnétisé avec le moyen de magnétisation (12).

3. Appareil selon la revendication 1 ou 2, comprenant un moyen de détection de position (21) pour détecter la position du marqueur routier (1).

4. Appareil selon la revendication 3, dans lequel le moyen de détection de position (21) inclut une bobine d'excitation (21b) pour générer un champ magnétique et une bobine de détection de champ magnétique (21c) disposée à l'intérieur du champ magnétique généré par la bobine d'excitation (21b) pour détecter les variations du champ magnétique.

5. Appareil selon l'une quelconque des revendications 1 à 4, comprenant un moyen de détection d'état magnétisé (13) pour détecter un état magnétisé du marqueur routier (1) magnétisé avec le moyen de magnétisation (12).

6. Appareil selon la revendication 5, dans lequel le moyen de détection d'état magnétisé (13) détecte une densité de flux magnétique en provenance du marqueur routier (1).

7. Appareil selon l'une quelconque des revendications 1 à 6, dans lequel une pluralité des marqueurs routiers (1) sont disposés à un pas spécifié (dw) dans une direction latérale (W) d'une route et également une pluralité d'unités de magnétisation (12) sont disposées au pas spécifié (dw) dans une direction latérale (W) de la route.

8. Appareil selon l'une quelconque des revendications 1 à 6, dans lequel une pluralité des marqueurs routiers (1) sont disposés dans une direction latérale (W) d'une route et le moyen de magnétisation (12) est déplacé par un moyen de déplacement (33b) dans une direction latérale (W) de la route.

9. Appareil selon l'une quelconque des revendications 1 à 8, monté sur un véhicule (2) destiné au travail de magnétisation des marqueurs routiers.
